# EUROPEAN PATENT APPLICATION

(11) **EP 4 722 017 A1**
(43) Date of publication of application: **08.04.2026**
(21) Application number: 24853386.1
(22) Date of filing: 27.06.2024
(51) Int. Cl.: B60L 7/18, B60L 15/20

(54) **VEHICLE CONTROL METHOD AND APPARATUS, AND STORAGE MEDIUM AND VEHICLE**

(30) Priority: 14.08.2023 CN 202311022240
(71) Applicant: Great Wall Motor Company Limited, Baoding, Hebei 071000 (CN)
(72) Inventor: YU, Jiaheng, Baoding, Hebei 071000 (CN); YANG, XueJing, Baoding, Hebei 071000 (CN); ZHANG, Jun, Baoding, Hebei 071000 (CN)
(74) Representative: Michalski Hüttermann & Partner Patentanwälte mbB
(86) International application number: PCT/CN2024/102107
(87) International publication number: WO 2025/035971

(57) **Abstract**

A vehicle control method, when a regenerative braking function of a vehicle is in an activated state, inputting a first available regenerative braking capacity value into a first prediction model, such that a second available regenerative braking capacity value at a second time point can be predicted; then based on the first available regenerative braking capacity value, the second available regenerative braking capacity value, and a brake pedal opening degree, determining a first regenerative braking torque request value at a first time point; then in combination with a first coasting energy recovery torque, determining a first motor actual execution torque; and finally, based on the first motor actual execution torque and a second regenerative braking torque request value at the second time point, determining whether to disable the regenerative braking function at the second time point. The method can mitigate an impact of a CAN signal delay to some extent, thereby preventing the regenerative braking function from being abnormally disabled. A vehicle control apparatus, a storage medium, a vehicle, and a computer program are further provided.

## Description

### CROSS-REFERENCE TO RELATED APPLICATIONS

This application claims priority to Chinese Patent Application No. 202311022240.7, filed on August 14, 2023 and titled "a vehicle control method and apparatus, storage medium, and vehicle", the entire content of which is incorporated herein by reference.

### TECHNICAL FIELD

This application relates to the field of vehicle technologies, and in particular, to a vehicle control method, a vehicle control apparatus, a storage medium, and a vehicle.

### BACKGROUND

With social progress and development, environmental protection and energy crisis issues have garnered increasing attention. As new energy vehicles hold significant advantages in energy conservation and environmental protection, the new energy vehicles have become an important development direction for the automotive industry. How to improve the driving range of new energy vehicles is a key technical problem that needs to be addressed. A regenerative braking function converts kinetic energy during vehicle braking and/or coasting into electrical energy, and stores the electrical energy in an energy storage unit of the vehicle, thereby increasing the driving range to some extent.

Currently, during a regenerative braking process, a comparison is typically made between a regenerative braking torque request value and a regenerative braking torque execution value. However, due to delays in controller area network (CAN) signal transmission and the response time required for motor torque execution, a difference often exists between the regenerative braking torque request value and the regenerative braking torque execution value. When the difference is large, it will trigger errors in regenerative braking torque function, causing the regenerative braking function to be abnormal disabled.

### SUMMARY

This application provides a vehicle control method, a vehicle control apparatus, a storage medium, and a vehicle, to address the problems in related technologies where the regenerative braking function is abnormally disabled due to CAN signal delays.

To resolve the above problems, this application adopts the following technical solutions:
In a first aspect, embodiments of this application provide a vehicle control method, which includes:
when a regenerative braking function of a vehicle is in an activated state, determining a first coasting energy recovery torque and a first available regenerative braking capacity value of the vehicle at a first time point;
inputting the first available regenerative braking capacity value into a pre-trained first prediction model to predict a second available regenerative braking capacity value at a second time point, where a time difference between the second time point and the first time point is a preset duration;
determining a first regenerative braking torque request value at the first time point based on the first available regenerative braking capacity value, the second available regenerative braking capacity value, and a brake pedal opening degree;
determining a first motor actual execution torque at the first time point based on the first regenerative braking torque request value and the first coasting energy recovery torque;
determining a second regenerative braking torque request value of the vehicle at the second time point;
determining whether to disable the regenerative braking function at the second time point based on the first motor actual execution torque and the second regenerative braking torque request value.

In an embodiment of this application, prior to determining the first coasting energy recovery torque and the first available regenerative braking capacity value of the vehicle at the first time point when the regenerative braking function of the vehicle is in the activated state, the method further includes:
determining a current torque request value of the vehicle upon detecting that an accelerator pedal of the vehicle is in a released state;
determining that the regenerative braking function is in a disabled state when the current torque request value is greater than a torque threshold;
determining that the regenerative braking function is in the activated state when the current torque request value is less than or equal to the torque threshold.

In an embodiment of this application, the determining the first coasting energy recovery torque and the first available regenerative braking capacity value of the vehicle at the first time point includes:
determining a vehicle negative torque capacity value based on a charging power of a power battery and a negative torque capacity of a motor;
determining the first coasting energy recovery torque based on a vehicle speed at the first time point;
determining the first available regenerative braking capacity value based on the vehicle negative torque capacity value and the first coasting energy recovery torque.

In an embodiment of this application, the first prediction model is a Markov model; the inputting the first available regenerative braking capacity value into the pre-trained first prediction model to predict the second available regenerative braking capacity value at the second time point includes:
inputting the first available regenerative braking capacity value into the Markov model, and determining the second available regenerative braking capacity value at the second time point based on a state transition matrix of the Markov model.

In an embodiment of this application, the determining the first regenerative braking torque request value at the first time point based on the first available regenerative braking capacity value, the second available regenerative braking capacity value, and the brake pedal opening degree includes:
determining a larger value between the first available regenerative braking capacity value and the second available regenerative braking capacity value as an actual available regenerative braking capacity value, and transmitting the actual available regenerative braking capacity value to a braking system controller;
receiving the first regenerative braking torque request value returned by the braking system controller; where the first regenerative braking torque request value is determined by the braking system controller based on the actual available regenerative braking capacity value and the brake pedal opening degree.

In an embodiment of this application, the determining whether to disable the regenerative braking function at the second time point based on the first motor actual execution torque and the second regenerative braking torque request value includes:
when the first motor actual execution torque is less than the second regenerative braking torque request value, determining the second regenerative braking torque request value as a target execution value;
when the first motor actual execution torque is greater than or equal to the second regenerative braking torque request value, inputting the second regenerative braking torque request value into a pre-trained second prediction model to predict a third regenerative braking torque request value at a third time point, and determining a larger value between the first motor actual execution torque and the third regenerative braking torque request value as the target execution value;
determining whether to disable the regenerative braking function at the second time point based on the target execution value and the second regenerative braking torque request value.

In an embodiment of this application, the determining whether to disable the regenerative braking function at the second time point based on the target execution value and the second regenerative braking torque request value includes:
determining an absolute value of a difference between the target execution value and the second regenerative braking torque request value;
when the absolute value is greater than a difference threshold, determining to disable the regenerative braking function at the second time point; and
when the absolute value is less than or equal to the difference threshold, determining not to disable the regenerative braking function at the second time point.

In a second aspect, based on the same inventive concept, embodiments of this application provide a vehicle control apparatus, which includes:
a first determination module, configured to determine a first coasting energy recovery torque and a first available regenerative braking capacity value of a vehicle at a first time point when a regenerative braking function of the vehicle is in an activated state;
a prediction module, configured to input the first available regenerative braking capacity value into a pre-trained first prediction model to predict a second available regenerative braking capacity value at a second time point, where a difference between the second time point and the first time point is a preset duration;
a second determination module, configured to determine a first regenerative braking torque request value at the first time point based on the first available regenerative braking capacity value, the second available regenerative braking capacity value, and a brake pedal opening degree;
a third determination module, configured to determine a first motor actual execution torque at the first time point based on the first regenerative braking torque request value and the first coasting energy recovery torque;
a fourth determination module, configured to determine a second regenerative braking torque request value of the vehicle at the second time point;
a fifth determination module, configured to determine whether to disable the regenerative braking function at the second time point based on the first motor actual execution torque and the second regenerative braking torque request value.

In an embodiment of this application, the vehicle control apparatus further includes:
a sixth determination module, configured to determine a current torque request value of the vehicle upon detecting that an accelerator pedal of the vehicle is in a released state;
a function disabling module, configured to determine that the regenerative braking function is in a disabled state when the current torque request value is greater than a torque threshold;
a function activation module, configured to determine that the regenerative braking function is in the activated state when the current torque request value is less than or equal to the torque threshold.

In an embodiment of this application, the first determination module includes:
a first determination sub-module, configured to determine a vehicle negative torque capacity value based on a charging power of a power battery and a negative torque capacity of a motor;
a second determination sub-module, configured to determine the first coasting energy recovery torque based on a vehicle speed at the first time point;
a third determination sub-module, configured to determine the first available regenerative braking capacity value based on the vehicle negative torque capacity value and the first coasting energy recovery torque.

In an embodiment of this application, the first prediction model is a Markov model. The prediction module includes:
a fourth determination sub-module, configured to input the first available regenerative braking capacity value into the Markov model, and determine the second available regenerative braking capacity value at the second time point based on a state transition matrix of the Markov model.

In an embodiment of this application, the second determination module includes:
a transmission sub-module, configured to determine a larger value between the first available regenerative braking capacity value and the second available regenerative braking capacity value as an actual available regenerative braking capacity value and transmit the actual available regenerative braking capacity value to a braking system controller;
a reception sub-module, configured to receive the first regenerative braking torque request value returned by the braking system controller, where the first regenerative braking torque request value is determined by the braking system controller based on the actual available regenerative braking capacity value and the brake pedal opening degree.

In an embodiment of this application, the fifth determination module includes:
a fifth determination sub-module, configured to determine the second regenerative braking torque request value as a target execution value when the first motor actual execution torque is less than the second regenerative braking torque request value;
a sixth determination sub-module, configured to, when the first motor actual execution torque is greater than or equal to the second regenerative braking torque request value, input the second regenerative braking torque request value into a pre-trained second prediction model to predict a third regenerative braking torque request value at a third time point, and determine a larger value between the first motor actual execution torque and the third regenerative braking torque request value as the target execution value;
a seventh determination sub-module, configured to determine whether to disable the regenerative braking function at the second time point based on the target execution value and the second regenerative braking torque request value.

In an embodiment of this application, the seventh determination sub-module includes:
an absolute value determination unit, configured to determine an absolute value of a difference between the target execution value and the second regenerative braking torque request value;
a function disabling unit, configured to determine to disable the regenerative braking function at the second time point when the absolute value is greater than a difference threshold;
a function maintaining unit, configured to determine not to disable the regenerative braking function at the second time point when the absolute value is less than or equal to the difference threshold.

In a third aspect, based on the same inventive concept, embodiments of this application provide a storage medium. The storage medium stores machine-executable instructions. The machine-executable instructions, when executed by a processor, implement the vehicle control method proposed in the first aspect of this application.

In a fourth aspect, based on the same inventive concept, embodiments of this application provide a vehicle, including a processor and a memory. The memory stores machine-executable instructions executable by the processor. The processor is configured to execute the machine-executable instructions to implement the vehicle control method proposed in the first aspect of this application.

In a fifth aspect, based on the same inventive concept, embodiments of this application provide a computer program, including computer-readable code. When the computer-readable code is executed on a computing processing device, it causes the computing processing device is caused to perform the vehicle control method proposed in the first aspect of this application.

Compared with conventional technologies, this application includes the following advantages:
The vehicle control method provided in the embodiments of this application, by determining a first coasting energy recovery torque and a first available regenerative braking capacity value of a vehicle at a first time point when a regenerative braking function of the vehicle is in an activated state, and inputting the first available regenerative braking capacity value into a pre-trained first prediction model to predict a second available regenerative braking capacity value at a second time point; based on the first available regenerative braking capacity value, the second available regenerative braking capacity value, and a brake pedal opening degree, determining a first regenerative braking torque request value at the first time point; then, by in combination with the first coasting energy recovery torque, obtaining a first motor actual execution torque at the first time point, and finally, based on the first motor actual execution torque and the second regenerative braking torque request value at the second time point, determining whether to disable the regenerative braking function at the second time point. The embodiments of this application employs the first prediction model to predict the available regenerative braking capacity value at the second time point after a preset time duration. This enables that the first motor actual execution torque determined at the first time point, based on the second available regenerative braking capacity value, more closely align with the second regenerative braking torque request value at the second time point, thereby mitigating the impact of CAN signal delay to some extent, enabling accurate judgment of the regenerative braking torque request values and the motor actual execution torque at respective time points, and effectively preventing abnormal disabling of the regenerative braking function.

### BRIEF DESCRIPTION OF THE DRAWINGS

FIG. 1 is a schematic diagram of steps of a vehicle control method according to an embodiment of this application;
FIG. 2 is a schematic diagram of functional modules of a vehicle control apparatus according to an embodiment of this application;
FIG. 3 is a schematic structure diagram of a vehicle according to an embodiment of this application;
FIG. 4 schematically shows a block diagram of a computing processing device for executing the method according to this application; and
FIG. 5 schematically shows a storage unit for retaining or carrying program code that implements the method according to this application.

### DETAILED DESCRIPTION OF THE EMBODIMENTS

The technical solutions in the embodiments of this application will be clearly and completely described below with reference to the accompanying drawings in the embodiments of this application. Obviously, the described embodiments are only a part of the embodiments of this application, rather than all of them. Based on the embodiments of this application, all other embodiments obtained by persons of ordinary skill in the art without creative efforts shall fall within the scope of protection of this application.

It should be noted that new energy vehicles include pure electric vehicles, range-extended electric vehicles, hybrid electric vehicles, fuel cell electric vehicles, hydrogen engine vehicles, etc. When a regenerative braking function is enabled in current new energy vehicles, torque interaction is required between the vehicle control unit (VCU) and the chassis for the regenerative braking function, mainly involving three torque values: an available regenerative braking torque value, a regenerative braking torque request value, and a regenerative braking torque execution value. Specifically, the VCU typically calculates the available regenerative braking torque value and sends it to a braking system controller of the chassis. The braking system controller determines, based on the available regenerative braking torque value and a braking demand torque triggered by a driver, the regenerative braking torque request value that needs to be fed back to the VCU. The VCU then sends the regenerative braking torque request value to a motor, enabling the motor to execute a regenerative braking operation based on the regenerative braking torque request value and feed the regenerative braking torque execution value back to the VCU. In other words, the regenerative braking torque request value and the regenerative braking torque execution value are the same. However, due to delays in CAN signal transmission and a response time required for the motor torque execution, there may be significant discrepancies between the regenerative braking torque request value and the regenerative braking torque execution value. For example, the VCU sends the regenerative braking torque request value to the motor at a time point t₁, and after a delay of 30 ms, the motor returns the regenerative braking torque execution value to the VCU at a time point t₂. At this point, the VCU compares the regenerative braking torque request value sent at the time point t₁ with the regenerative braking torque execution value received at the time point t₂, as a result, a difference exists between the regenerative braking torque request value and the regenerative braking torque execution value most of the time. When the difference is large, it will trigger errors in the regenerative braking torque function, causing the regenerative braking function to be abnormally disabled. Additionally, poor coordination between the regenerative braking torque and a hydraulic braking torque may occur, resulting in impacts on the vehicle's overall braking performance.

Aiming at the problem in related technologies where the regenerative braking function is abnormally disabled due to CAN signal delays, this application aims to provide a vehicle control method, by employing a first prediction model to predict an available regenerative braking capacity value at a second time point after a preset duration, a first motor actual execution torque at a first time point obtained based on a second available regenerative braking capacity value can more closely align with actual situations when compared with a second regenerative braking torque request value at the second time point, achieving accurate judgment of the second regenerative braking torque request value and the first motor actual execution torque, thereby mitigating the impact of CAN signal delays to some extent, effectively preventing abnormal disabling of the regenerative braking function, and avoiding impacts on the vehicle's overall braking performance.

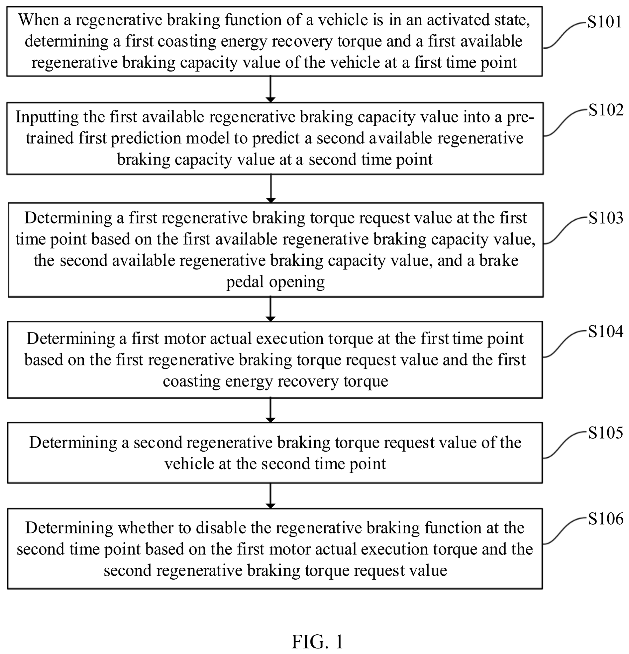

In a first aspect, referring to FIG. 1, a vehicle control method of this application is shown, which may include the following steps:
S101, when a regenerative braking function of a vehicle is in an activated state, determining a first coasting energy recovery torque and a first available regenerative braking capacity value of the vehicle at a first time point.

It should be noted that an execution entity in this embodiment may be a computing service device with data processing, network communication, and program running functions, or electronic devices with the above functions, such as an onboard computer or a vehicle computer. This embodiment will use the VCU as the execution entity for explanation. It should be noted that this embodiment does not impose specifically limitations on the execution entity of the vehicle.

In this embodiment, a driver can activate the regenerative braking function of the vehicle by releasing the accelerator pedal and/or stepping on the brake pedal. After confirming that the regenerative braking function is in the activated state, the VCU will calculate the first coasting energy recovery torque generated during vehicle coasting and the first available regenerative braking capacity value generated during vehicle braking. The sum of the first coasting energy recovery torque and the first available regenerative braking capacity value constitutes a vehicle negative torque capacity value, i.e., a maximum negative torque that can be applied to a motor at the first time point to generate electricity to charge a power battery.

It should be noted that the first available regenerative braking capacity value represents the maximum brake torque available for conversion into battery energy at the first time point. For example, if the first available regenerative braking capacity value is -700 N·m and a braking demand of the driver is -1000 N·m, then - 700 N·m of the -1000 N·m can be used for regenerative braking, while the remaining -300 N·m is provided by a braking mechanism.

S102, inputting the first available regenerative braking capacity value into a pre-trained first prediction model to predict a second available regenerative braking capacity value at a second time point.

It should be noted that a time difference between the second time point and the first time point is a preset duration, which is a CAN signal delay for signal transmission between the VCU and a braking system controller of a chassis, and can be specifically calibrated through experiments.

In this implementation, considering that there may be a significant difference between the first available regenerative braking capacity value at the first time point and the second available regenerative braking capacity value at the second time point, if the first available regenerative braking capacity value is directly used to calculate a first motor actual execution torque at the first time point, there will be a significant difference when comparing the first motor actual execution torque with a second regenerative braking torque request value at the second time point due to the existence of CAN signal delay. The reason for this is that the second regenerative braking torque request value at the second time point is determined based on the second available regenerative braking capacity value at the second time point. Therefore, to mitigate an impact of the CAN signal delay to some extent, the second available regenerative braking capacity value at the second time point is predicted based on the first available regenerative braking capacity value.

In specific implementation, the first prediction model can be trained using a sufficient amount of real vehicle data. For example, the real vehicle data from each time cycle can be treated as one dataset, and torque values can be divided into 200 intervals, with each interval being 10 N. Using the first prediction model, an available regenerative braking capacity value for a future preset duration is gradually predicted, allowing the first prediction model to learn the variation patterns of the available regenerative braking capacity value. Subsequently, by inputting the first available regenerative braking capacity value into the pre-trained first prediction model, the second available regenerative braking capacity value at the second time point after the preset duration can be accurately predicted.

In specific implementation, the first prediction model can adopt a Markov Model. The Markov Model is a statistical model, which is a discrete-time stochastic process in mathematics that processes the Markov property. In this process, given the current knowledge or information, the past (i.e., historical states before the current time) is irrelevant for predicting the future (i.e., future states after the current time).

In this embodiment, after training the Markov Model with a sufficient amount of the real vehicle data, a state transition matrix can be obtained. Then, after inputting the first available regenerative braking capacity value into the Markov Model, the state transition matrix can accurately predict the second available regenerative braking capacity value at the second time point based on the first available regenerative braking capacity value at the first time point.

S103, determining a first regenerative braking torque request value at the first time point based on the first available regenerative braking capacity value, the second available regenerative braking capacity value, and a brake pedal opening degree.

In this embodiment, considering that the predicted second available regenerative braking capacity value may be less than the first available regenerative braking capacity value and could potentially exceed the vehicle negative torque capacity value at that moment, after predicting the second available regenerative braking capacity value, the validity of the second available regenerative braking capacity value will be verified after prediction. For example, if the second available regenerative braking capacity value is greater than or equal to the first available regenerative braking capacity value, the second available regenerative braking capacity value is determined to be valid; otherwise, the second available regenerative braking capacity value is determined to be invalid, that is, the second available regenerative braking capacity value will not be used. This approach effectively ensures the safety of the vehicle during regenerative braking , preventing damage to the motor and the power battery.

In this embodiment, when the second available regenerative braking capacity value is determined to be valid, the first regenerative braking torque request value at the first time point is determined based on the second available regenerative braking capacity value and the brake pedal opening degree. When the second available regenerative braking capacity value is determined to be invalid, the first regenerative braking torque request value at the first time point is determined based on the first available regenerative braking capacity value and the brake pedal opening degree.

S104, determining a first motor actual execution torque at the first time point based on the first regenerative braking torque request value and the first coasting energy recovery torque.

In specific implementation, the first regenerative braking torque request value and the first coasting energy recovery torque can be superimposed, and the sum of the two is determined as the first motor actual execution torque at the first time point. Then, the VCU generates a motor control instruction containing the first motor actual execution torque and sends the motor control instruction to the motor. The motor, in respond to the motor control instruction, outputs torque according to the first motor actual execution torque to perform the regenerative braking operation.

S105, determining a second regenerative braking torque request value of the vehicle at the second time point.

It should be noted that after the motor executes the regenerative braking operation, it will feed back the actual execution torque, i.e., the first motor actual execution torque, to the VCU. The moment at which the first motor actual execution torque is fed back to the VCU is the second time point.

In this embodiment, the VCU will calculate the second regenerative braking torque request value corresponding to the second time point based on a second coasting energy recovery torque, the second available regenerative braking capacity value, and a second brake pedal opening degree at the second time point. It should be noted that the calculation method for the second regenerative braking torque request value at the second time point can refer to the steps for calculating the first regenerative braking torque request value at the first time point in S101 to S103, which will not be repeated here.

S106, determining whether to disable the regenerative braking function at the second time point based on the first motor actual execution torque and the second regenerative braking torque request value.

In this embodiment, since the first motor actual execution torque is determined based on the predicted second available regenerative braking capacity value, at the second time point, the first motor actual execution torque at the first time point can more closely approximate the second regenerative braking torque request value required by the motor at the second time point, thereby mitigating the impact of CAN signal delays to some extent, enabling accurate judgment of the regenerative braking torque request value and the motor actual execution torque at each corresponding time point, thereby effectively preventing abnormal disabling of the regenerative braking function.Additionally, this improves the coordination between the regenerative braking torque and a hydraulic braking torque, ensuring a braking performance of the vehicle and avoiding impacts on the overall braking performance.

In an embodiment of this application, before S101, the vehicle control method may further include the following steps:
S201, determining a current torque request value of the vehicle upon detecting that the accelerator pedal of the vehicle is in a released state.

In this embodiment, it is considered that in related technologies, upon detecting that the accelerator pedal is in the released state, the regenerative braking function will be activated to recover coasting energy. However, when the driver quickly releases the accelerator pedal and depresses the brake pedal, to ensure driving performance of the vehicle, the vehicle torque needs to gradually decrease from a positive torque value to zero. If the current torque request value of the vehicle is large, it cannot quickly respond to the negative torque request of the regenerative braking torque. This may easily cause the regenerative braking torque function to trigger an error after the accelerator pedal is released, leading to the disabling of the regenerative braking function.

In this embodiment, to solve the problem in related technologies where it is not effectively determine whether the vehicle has the capability to respond to the regenerative braking torque, upon detecting that the accelerator pedal is in the released state, the VCU will not immediately activate the regenerative braking function. Instead, it will continuously monitors the current torque request value of the vehicle.

S202, determining that the regenerative braking function is in a disabled state when the current torque request value is greater than a torque threshold.

In this embodiment, by setting the torque threshold, the VCU will not activate the regenerative braking function until the current torque request value drops below the torque threshold, thereby effectively avoiding errors in the regenerative braking torque function.

For example, the torque threshold can be set to 0 N or a small positive value, such as 10 N. Thus, when the current torque request value is greater than 10 N, the VCU sets the available regenerative braking capacity value to 0 N and sends it to the chassis, thereby notifying the chassis that the vehicle currently lacks the capability to perform regenerative braking.

S203, determining that the regenerative braking function is in the activated state when the current torque request value is less than or equal to the torque threshold.

In this embodiment, when the current torque request value is less than or equal to the torque threshold, the VCU will activate the regenerative braking function, calculate the current available regenerative braking capacity value based on actual operating conditions, and send the current available regenerative braking capacity value to the chassis, enabling the chassis to provide feedback on the regenerative braking torque request value required by the motor.

In this embodiment, by monitoring the current torque request value after detecting that the accelerator pedal is in the released state, it is possible to accurately determine whether the vehicle has the capability to respond to the regenerative braking torque. This ensures that, once the regenerative braking function is activated, the current available regenerative braking capacity value of the vehicle can be accurately calculated, thereby preventing errors in the regenerative braking torque function.

In an embodiment of this application, S101 may include the following sub-steps: S101-1, determining a vehicle negative torque capacity value based on a charging power of a power battery and a negative torque capacity of a motor.

It should be noted that the charging power of the power battery represents the maximum power at which the power battery can currently be charged. The charging power is related to parameters such as the current state of charge (SOC, also known as the remaining battery charge), operating temperature, and electrode materials of the power battery. The negative torque capacity of the motor represents the maximum negative torque that the motor can output, and the negative torque capacity is related to parameters such as a rotational speed of the motor.

In specific implementation, the VCU will calculate the maximum chargeable torque corresponding to the charging power based on the charging power of the power battery. If the negative torque capacity of the motor is greater than the maximum chargeable torque, the maximum chargeable torque is determined as the vehicle negative torque capacity value. If the negative torque capacity of the motor is less than or equal to the maximum chargeable torque, the negative torque capacity of the motor is determined as the vehicle negative torque capacity value.

In this embodiment, by calculating the vehicle negative torque capacity value based on the charging power of the power battery and the negative torque capacity of the motor, it is possible to maximize the control of the motor for regenerative braking while ensuring the charging safety of the power battery.

S101-2, determining the first coasting energy recovery torque based on a vehicle speed at the first time point.

In specific implementation, a two-dimensional relationship table between vehicle speeds and coasting energy recovery torques can be pre-constructed. After determining the vehicle speed at the first time point, the VCU can refer to this two-dimensional relationship table to determine the first coasting energy recovery torque corresponding to the vehicle speed. The higher the vehicle speed, the greater the corresponding coasting energy recovery torque.

S101-3, determining the first available regenerative braking capacity value based on the vehicle negative torque capacity value and the first coasting energy recovery torque.

In this embodiment, by subtracting the first coasting energy recovery torque from the vehicle negative torque capacity value, the first available regenerative braking capacity value is obtained. For example, if the calculated vehicle negative torque capacity value is -100 N·m and the first coasting energy recovery torque is - 10 N·m, the first available regenerative braking capacity value would be -90 N·m.

In an embodiment of this application, S103 may include the following sub-steps: S103-1, determining a larger value between the first available regenerative braking capacity value and the second available regenerative braking capacity value as an actual available regenerative braking capacity value, and transmitting the actual available regenerative braking capacity value to the braking system controller.

It should be noted that both the first available regenerative braking capacity value and the second available regenerative braking capacity value are negative torque values that are less than or equal to zero. Therefore, the VCU will perform a maximum value operation to determine the larger of the two values as the actual available regenerative braking capacity value, i.e., the actual available regenerative braking capacity value = max (the first available regenerative braking capacity value, the second available regenerative braking capacity value), thereby ensuring the safety of a regenerative braking process.

S103-2, receiving the first regenerative braking torque request value returned by the braking system controller. The first regenerative braking torque request value is determined by the braking system controller based on the actual available regenerative braking capacity value and the brake pedal opening degree.

In this embodiment, after determining the actual available regenerative braking capacity value through the maximum value operation, the VCU sends the actual available regenerative braking capacity value to the braking system controller of the chassis. The braking system controller will calculate a driver-requested braking force based on the brake pedal opening degree triggered by a driver, and return the first regenerative braking torque request value to the VCU based on the actual available regenerative braking capacity value and the driver-requested braking force.

It should be noted that if the actual available regenerative braking capacity value is greater than or equal to the driver-requested braking force, a negative torque output by the motor for the regenerative braking can meet a vehicle braking demand. The braking system controller will set the first regenerative braking torque request value equal to the driver-requested braking force. If the actual available regenerative braking capacity value is less than the driver-requested braking force, the negative torque output by the motor for the regenerative braking cannot meet the vehicle braking demand, the braking system controller will set the first regenerative braking torque request value equal to the actual available regenerative braking capacity value, determine a difference between the driver-requested braking force and the actual available regenerative braking capacity value as a target braking force, and control the braking mechanism to perform a braking operation according to the target braking force, thereby meeting the vehicle braking demand.

In an embodiment of the present disclosure, the S106 may include the following sub-steps:

S106-1, when the first motor actual execution torque is less than the second regenerative braking torque request value, determining the second regenerative braking torque request value as a target execution value.

In this embodiment, when the first motor actual execution torque is less than the second regenerative braking torque request value, an intensity of the regenerative braking is undergoing normal reduction at the second time point. In this case, the VCU determines the second regenerative braking torque request value as the target execution value, ensuring a zero difference between the target execution value and the second regenerative braking torque request value is zero, thereby maintaining normal operation of the regenerative braking function.

For example, if the first motor actual execution torque is -600 N·m and the second regenerative braking torque request value is -500 N·m, the second regenerative braking torque request value is determined as the target execution value, i.e., the target execution value is determined to be -500 N·m.

S106-2, when the first motor actual execution torque is greater than or equal to the second regenerative braking torque request value, inputting the second regenerative braking torque request value into a pre-trained second prediction model to predict a third regenerative braking torque request value at a third time point, and determining a larger value between the first motor actual execution torque and the third regenerative braking torque request value as the target execution value.

In this embodiment, when the first motor actual execution torque is greater than or equal to the second regenerative braking torque request value, it indicates that that intensity of the regenerative braking has increased rather than decreased at the second time point. This situation may arise from a temporary sharp depression of the accelerator pedal by the driver, causing a sudden increase in the second regenerative braking torque request value. If the regenerative braking function is directly disabled in such cases, subsequent braking energy may not be effectively recovered. Therefore, the second prediction model is used to predict the third regenerative braking torque request value at the third time point, and then based on the predicted third regenerative braking torque request value, a further determination is made on whether to disable the regenerative braking function. The second prediction model may be trained based on a Markov model, and its pre-training method may be similar to that of the first prediction model.

In specific implementation, the target execution value can similarly be determined by taking the larger value between the third regenerative braking torque request value and the first motor actual execution torque through the maximum value operation.

For example, if the first motor actual execution torque is -400 N·m and the second regenerative braking torque request value is -500 N·m, the second prediction model will be used to predict the third regenerative braking torque request value at the third time point, resulting in a predicted third regenerative braking torque request value of -480 N·m. Then, by performing the maximum value operation between the third regenerative braking torque request value and the first motor actual execution torque, the target execution value is determined as max (-480 N·m, -400 N·m) = - 400 N·m.

S106-3, based on the target execution value and the second regenerative braking torque request value, determining whether to disable the regenerative braking function at the second time point.

In this embodiment, by comparing the target execution value with the second regenerative braking torque request value, it is possible to accurately determined whether the regenerative braking function needs to be disabled at the second time point.

In specific implementation, an absolute value of a difference between the target execution value and the second regenerative braking torque request value can first be determined. If the absolute value is greater than a difference threshold, the regenerative braking function is determined to be disabled at the second time point. If the absolute value is less than or equal to the difference threshold, the regenerative braking function is determined not to be disabled at the second time point.

In this embodiment, by using the second prediction model to predict the second regenerative braking torque request value, error reports of the regenerative braking function under special conditions, such as when the driver quickly taps the brake pedal, may be effectively avoided. This approach ensures that as much braking energy as possible is recovered while maintaining braking safety and meeting braking demands.

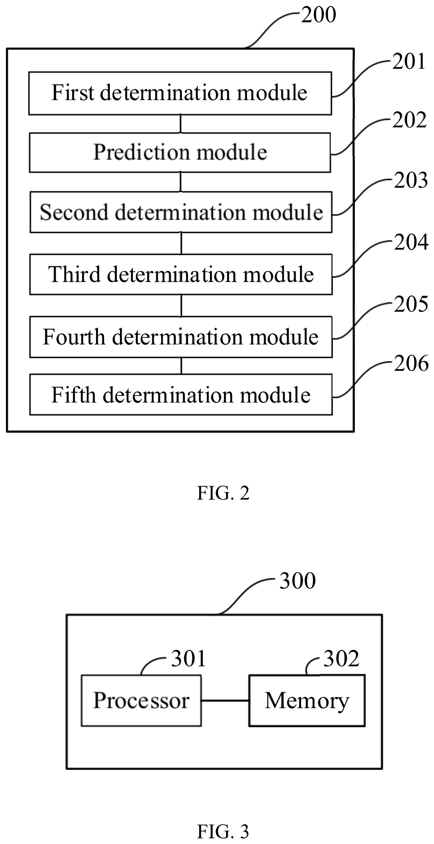

In a second aspect, based on the same inventive concept and referring to FIG. 2, embodiments of this application provide a vehicle control apparatus 200, which includes the follows.

A first determination module 201 is configured to determine a first coasting energy recovery torque and a first available regenerative braking capacity value of a vehicle at a first time point when a regenerative braking function of the vehicle is in an activated state.

A prediction module 202 is configured to input the first available regenerative braking capacity value into a pre-trained first prediction model to predict a second available regenerative braking capacity value at a second time point, where a time difference between the second time point and the first time point is a preset duration.

A second determination module 203 is configured to determine a first regenerative braking torque request value at the first time point based on the first available regenerative braking capacity value, the second available regenerative braking capacity value, and a brake pedal opening degree.

A third determination module 204 is configured to determine a first motor actual execution torque at the first time point based on the first regenerative braking torque request value and the first coasting energy recovery torque.

A fourth determination module 205 is configured to determine a second regenerative braking torque request value of the vehicle at the second time point.

A fifth determination module 206 is configured to determine whether to disable the regenerative braking function at the second time point based on the first motor actual execution torque and the second regenerative braking torque request value.

In an embodiment of this application, the vehicle control apparatus 200 further includes the follows.

A sixth determination module is configured to determine a current torque request value of the vehicle upon detecting that an accelerator pedal of the vehicle is in a released state.

A function disable module is configured to determine that the regenerative braking function is in a disabled state when the current torque request value is greater than a torque threshold.

A function activation module is configured to determine that the regenerative braking function is in the activated state when the current torque request value is less than or equal to the torque threshold.

In an embodiment of this application, the first determination module 201 includes the follows.

A first determination sub-module is configured to determine a vehicle negative torque capacity value based on a charging power of a power battery and a negative torque capacity of a motor.

A second determination sub-module is configured to determine the first coasting energy recovery torque based on a vehicle speed at the first time point.

A third determination sub-module is configured to determine the first available regenerative braking capacity value based on the vehicle negative torque capacity value and the first coasting energy recovery torque.

In an embodiment of this application, the first prediction model is a Markov model. The prediction module 202 includes the follows.

A fourth determination sub-module is configured to input the first available regenerative braking capacity value into the Markov model, and determine the second available regenerative braking capacity value at the second time point based on a state transition matrix of the Markov model.

In an embodiment of this application, the second determination module 203 includes the follows.

A transmission sub-module is configured to determine a larger value between the first available regenerative braking capacity value and the second available regenerative braking capacity value as an actual available regenerative braking capacity value, and transmit the actual available regenerative braking capacity value to the braking system controller.

A reception sub-module is configured to receive the first regenerative braking torque request value returned by the braking system controller, where the first regenerative braking torque request value is determined by the braking system controller based on the actual available regenerative braking capacity value and the brake pedal opening degree.

In an embodiment of this application, the fifth determination module 206 includes the follows.

A fifth determination sub-module is configured to determine the second regenerative braking torque request value as a target execution value when the first motor actual execution torque is less than the second regenerative braking torque request value.

A sixth determination sub-module is configured to, when the first motor actual execution torque is greater than or equal to the second regenerative braking torque request value, input the second regenerative braking torque request value into a pre-trained second prediction model to predict a third regenerative braking torque request value at a third time point, and determine a larger value between the first motor actual execution torque and the third regenerative braking torque request value as the target execution value.

A seventh determination sub-module is configured to determine whether to disable the regenerative braking function at the second time point based on the target execution value and the second regenerative braking torque request value.

In an embodiment of this application, the seventh determination sub-module includes the follows.

An absolute value determination unit is configured to determine an absolute value of a difference between the target execution value and the second regenerative braking torque request value.

A function disabling unit is configured to determine to disable the regenerative braking function at the second time point when the absolute value is greater than a difference threshold.

A function maintaining unit is configured to determine not to disable the regenerative braking function at the second time point when the absolute value is less than or equal to the difference threshold.

It should be noted that the specific implementation of the vehicle control apparatus 200 in the embodiments of this application refers to the specific implementation of the vehicle control method proposed in the first aspect of this application as described above, and details are not repeated here.

In a third aspect, based on the same inventive concept, embodiments of this application provide a storage medium. The storage medium stores machine-executable instructions, which, when executed by a processor, implement the vehicle control method proposed in the first aspect of this application.

It should be noted that the specific implementation of the storage medium in the embodiments of this application refers to the specific implementation of the vehicle control method proposed in the first aspect of this application as described above, and details are not repeated here.

In a fourth aspect, based on the same inventive concept, referring to FIG. 3, embodiments of this application provide a vehicle 300, including a processor 301 and a memory 302. The memory 302 stores machine-executable instructions executable by the processor 301. The processor 301 is configured to execute the machine-executable instructions to implement the vehicle control method proposed in the first aspect of this application.

It should be noted that the specific implementation of the vehicle 300 in the embodiments of this application refers to the specific implementation of the vehicle control method proposed in the first aspect of this application as described above, and details are not repeated here.

In a fifth aspect, based on the same inventive concept, embodiments of this application provide a computer program, including computer-readable code. When the computer-readable code is executed on a computing processing device, it causes the computing processing device to perform the vehicle control method proposed in the first aspect of this application.

It should be noted that the specific implementation of the computer program in the embodiments of this application refers to the specific implementation of the vehicle control method proposed in the first aspect of this application as described above, and details are not repeated here.

Persons skilled in the art should understand that the embodiments of this application may be provided as a method, an apparatus, or a computer program product. Accordingly, the embodiments of this application may take the form of an entirely hardware embodiment, an entirely software embodiment, or an embodiment combining software and hardware aspects. Furthermore, the embodiments of this application may take the form of a computer program product implemented on one or more computer-usable storage media (including, but not limited to, disk storage, CD-ROM, optical storage, etc.) containing computer-usable program code.

The embodiments of this application are described with reference to flowcharts and/or block diagrams of the methods, terminal devices (systems), and computer program products according to the embodiments of this application. It should be understood that each flow and/or block in the flowcharts and/or block diagrams, as well as combinations of flows and/or blocks in the flowcharts and/or block diagrams, may be implemented by computer program instructions. These computer program instructions may be provided to a processor of a general-purpose computer, a special-purpose computer, an embedded processor, or other programmable data processing terminal device to produce a machine, such that the instructions executed by the processor of the computer or other programmable data processing terminal device create means for implementing the functions specified in one or more flows of the flowchart and/or one or more blocks of the block diagram.

Various component embodiments of this application may be implemented in hardware, or in software modules running on one or more processors, or in a combination thereof. Persons skilled in the art should understand that microprocessors or digital signal processors (DSPs) may be used in practice to implement some or all of the functions of some or all of the components in the computing processing device according to the embodiments of the present disclosure. The present disclosure may also be implemented as a device or an apparatus program (e.g., a computer program and a computer program product) for executing some or all of the methods described herein. Such a program for implementing the present disclosure may be stored on a computer-readable medium or may be on the form of one or more signals. Such signals may be downloaded from an internet website, provided on a carrier signal, or provided in any other form.

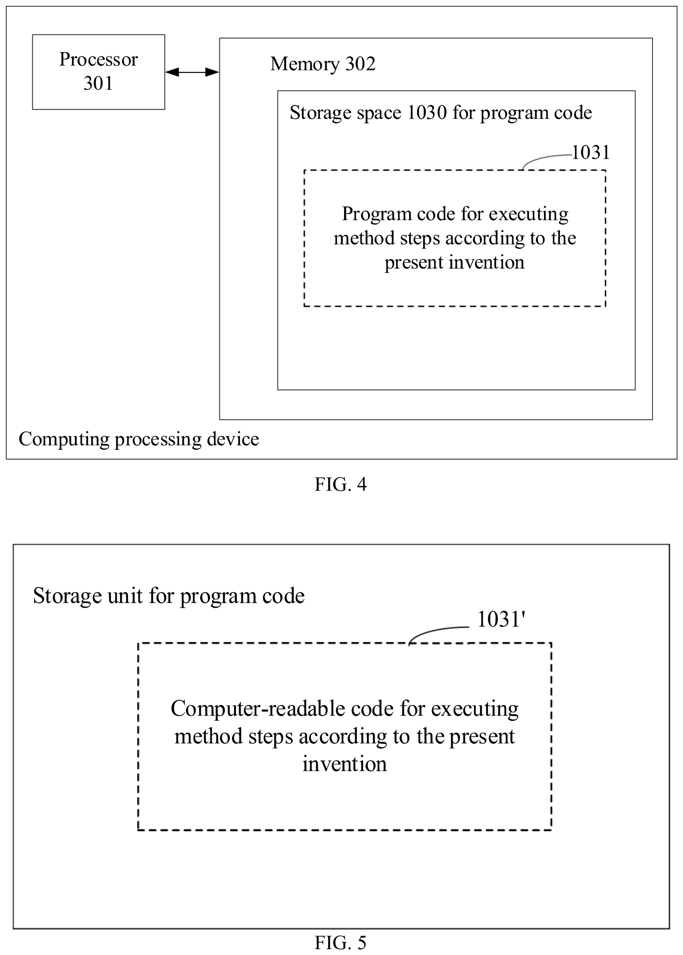

For example, FIG. 4 shows a computing processing device that can implement the method according to the present disclosure. The computing processing device conventionally includes a processor 301 and a computer program product or computer-readable medium in the form of a memory 302. The memory 302 may be an electronic memory such as flash memory, electrically erasable programmable read-only memory (EEPROM), EPROM, a hard disk, or ROM. The memory 302 has a storage space 1030 for program code 1031 for executing any method steps in the aforementioned methods. For example, the storage space 1030 for the program code may include various program codes 1031 for respectively implementing the various steps in the methods described above. These program codes may be read from or written to one or more computer program products. These computer program products include program code carriers such as hard disks, compact disks (CDs), memory cards, or floppy disks. Such computer program products are typically portable or fixed storage units as described with reference to FIG. 5. The storage unit may have storage segments, storage spaces, etc., arranged similarly to the memory 302 in the computing processing device shown in FIG. 4. The program code may be compressed, for example, in an appropriate form. Typically, the storage unit includes computer-readable code 1031', i.e., code that may be read by processors such as the processor 301, which, when executed by the computing processing device, causes the computing processing device to perform various steps in the methods described above.

These computer program instructions can also be stored in a computer-readable memory that can direct a computer or other programmable data processing terminal device to function in a particular manner, such that the instructions stored in the computer-readable memory produce an article of manufacture including instruction means that implement the functions specified in one or more flows of the flowchart and/or one or more blocks of the block diagram.

These computer program instructions may also be stored in a computer or other programmable data processing terminal device, causing a series of operational steps to be performed on the computer or other programmable terminal device to produce a computer-implemented process, such that the instructions which executed on the computer or other programmable terminal device provide steps for implementing the functions specified in one or more flows of the flowchart and/or one or more blocks of the block diagram.

Although preferred embodiments of the embodiments of this application have been described, those skilled in the art, once aware of the basic inventive concepts, may make additional changes and modifications to these embodiments. Therefore, the appended claims are intended to be interpreted as including the preferred embodiments and all changes and modifications falling within the scope of the embodiments of this application.

## Claims

1. A vehicle control method, **characterized by**, comprising:
when a regenerative braking function of a vehicle is in an activated state, determining a first coasting energy recovery torque and a first available regenerative braking capacity value of the vehicle at a first time point;
inputting the first available regenerative braking capacity value into a pre-trained first prediction model to predict a second available regenerative braking capacity value at a second time point, wherein a time difference between the second time point and the first time point is a preset duration;
determining a first regenerative braking torque request value at the first time point based on the first available regenerative braking capacity value, the second available regenerative braking capacity value, and a brake pedal opening degree;
determining a first motor actual execution torque at the first time point based on the first regenerative braking torque request value and the first coasting energy recovery torque;
determining a second regenerative braking torque request value of the vehicle at the second time point; and
determining whether to disable the regenerative braking function at the second time point based on the first motor actual execution torque and the second regenerative braking torque request value.

2. The vehicle control method according to claim 1, wherein prior to determining the first coasting energy recovery torque and the first available regenerative braking capacity value of the vehicle at the first time point when the regenerative braking function of the vehicle is in the activated state, the method further comprises:
determining a current torque request value of the vehicle upon detecting that an accelerator pedal of the vehicle is in a released state;
determining that the regenerative braking function is in a disabled state when the current torque request value is greater than a torque threshold; and
determining that the regenerative braking function is in the activated state when the current torque request value is less than or equal to the torque threshold.

3. The vehicle control method according to claim 1, wherein the determining the first coasting energy recovery torque and the first available regenerative braking capacity value of the vehicle at the first time point comprises:
determining a vehicle negative torque capacity value based on a charging power of a power battery and a negative torque capacity of a motor;
determining the first coasting energy recovery torque based on a vehicle speed at the first time point; and
determining the first available regenerative braking capacity value based on the vehicle negative torque capacity value and the first coasting energy recovery torque.

4. The vehicle control method according to claim 1, wherein the first prediction model is a Markov model; the inputting the first available regenerative braking capacity value into the pre-trained first prediction model to predict the second available regenerative braking capacity value at the second time point comprises:
inputting the first available regenerative braking capacity value into the Markov model, and determining the second available regenerative braking capacity value at the second time point based on a state transition matrix of the Markov model.

5. The vehicle control method according to claim 1, wherein the determining the first regenerative braking torque request value at the first time point based on the first available regenerative braking capacity value, the second available regenerative braking capacity value, and the brake pedal opening degree comprises:
determining a larger value between the first available regenerative braking capacity value and the second available regenerative braking capacity value as an actual available regenerative braking capacity value, and transmitting the actual available regenerative braking capacity value to a braking system controller; and
receiving the first regenerative braking torque request value returned by the braking system controller, wherein the first regenerative braking torque request value is determined by the braking system controller based on the actual available regenerative braking capacity value and the brake pedal opening degree.

6. The vehicle control method according to claim 1, wherein the determining whether to disable the regenerative braking function at the second time point based on the first motor actual execution torque and the second regenerative braking torque request value comprises:
when the first motor actual execution torque is less than the second regenerative braking torque request value, determining the second regenerative braking torque request value as a target execution value;
when the first motor actual execution torque is greater than or equal to the second regenerative braking torque request value, inputting the second regenerative braking torque request value into a pre-trained second prediction model to predict a third regenerative braking torque request value at a third time point, and determining a larger value between the first motor actual execution torque and the third regenerative braking torque request value as the target execution value; and
determining whether to disable the regenerative braking function at the second time point based on the target execution value and the second regenerative braking torque request value.

7. The vehicle control method according to claim 6, wherein the determining whether to disable the regenerative braking function at the second time point based on the target execution value and the second regenerative braking torque request value comprises:
determining an absolute value of a difference between the target execution value and the second regenerative braking torque request value;
when the absolute value is greater than a difference threshold, determining to disable the regenerative braking function at the second time point; and
when the absolute value is less than or equal to the difference threshold, determining not to disable the regenerative braking function at the second time point.

8. A vehicle control apparatus, **characterized by**, comprises:
a first determination module, configured to determine a first coasting energy recovery torque and a first available regenerative braking capacity value of a vehicle at a first time point when a regenerative braking function of the vehicle is in an activated state;
a prediction module, configured to input the first available regenerative braking capacity value into a pre-trained first prediction model to predict a second available regenerative braking capacity value at a second time point, wherein a time difference between the second time point and the first time point is a preset duration;
a second determination module, configured to determine a first regenerative braking torque request value at the first time point based on the first available regenerative braking capacity value, the second available regenerative braking capacity value, and a brake pedal opening degree;
a third determination module, configured to determine a first motor actual execution torque at the first time point based on the first regenerative braking torque request value and the first coasting energy recovery torque;
a fourth determination module, configured to determine a second regenerative braking torque request value of the vehicle at the second time point; and
a fifth determination module, configured to determine whether to disable the regenerative braking function at the second time point based on the first motor actual execution torque and the second regenerative braking torque request value.

9. A storage medium storing machine-executable instructions, wherein the machine-executable instructions, when executed by a processor, implement the vehicle control method according to any one of claims 1 to 7.

10. A vehicle, **characterized by**, comprising a processor and a memory, wherein the memory stores machine-executable instructions executable by the processor; the processor is configured to execute the machine-executable instructions to implement the vehicle control method according to any one of claims 1 to 7.

11. A computer program, **characterized by**, comprising computer-readable code, wherein when the computer-readable code is executed on a computing processing device, it causes the computing processing device to perform the vehicle control method according to any one of claims 1 to 7.
